# EUROPÄISCHE PATENTSCHRIFT

(11) **EP 3 135 574 B1**
(45) Veröffentlichungstag und Bekanntmachung des Hinweises auf die Patenterteilung: **24.11.2021**
(21) Anmeldenummer: 16184978.1
(22) Anmeldetag: 19.08.2016
(51) Int. Cl.: B62K 27/12, E05B 29/00, E05B 71/00

(54) **KUPPLUNG**
COUPLING
COUPLAGE

(30) Priorität: 24.08.2015 DE 102015114022
(43) Veröffentlichungstag der Anmeldung: 01.03.2017
(73) Patentinhaber: Croozer GmbH, 50354 Hürth (DE)
(72) Erfinder: Gray, Roger, London SE3 7NT (GB); Schneider, Georg, 53340 Meckenheim (DE)
(74) Vertreter: Lenzing Gerber Stute

(56) Entgegenhaltungen:
- WO-A1-2013/156578
- CH-A5- 692 285
- GB-A- 191 227 361
- US-A1- 2006 076 380
- US-B1- 7 766 358
- US-B1- 9 102 376
- None

## Beschreibung

Die vorliegende Erfindung betrifft eine Kupplung zum Verbinden und/oder Zusammenhalten zweier Teile, insbesondere für einen Fahrradanhänger, mit den Merkmalen des Oberbegriffs des Anspruchs 1.

Fahrradanhänger erfreuen sich einer immer größeren Beliebtheit. Dies liegt unter anderem daran, dass die Nutzungsmöglichkeiten von Fahrradanhängern stetig erweitert werden. So gibt es Multifunktions-Kinderfahrradanhänger, die neben dem Anhängerbetrieb durch einfachen Umbau auch die Möglichkeit bieten, den Fahrradanhänger als Kinderwagen oder als sogenannten Jogger zu benutzen. Hierfür werden für die jeweilige Funktion am Chassis des Fahrradanhängers ein Vorderrad angebracht und die Deichsel des Fahrradanhängers entfernt oder weggeklappt. Es müssen also verschiedene Teile mit dem Fahrradanhänger verbunden oder von diesem abgenommen werden. Darüber hinaus muss der Fahrradanhänger für den Betrieb als Fahrradanhänger regelmäßig an ein Fahrrad oder Pedelec angekoppelt bzw. davon abgekoppelt werden.

Um die Handhabbarkeit beim An- und Abkoppeln der Deichsel von einem Fahrrad zu verbessern, ist aus der WO 2013/15678 eine Anhängerkupplung mit zwei zusammenwirkenden und voneinander lösbaren Kupplungsteilen bekannt, von denen das eine ortsfest mit dem Fahrzeug und das andere mit der Deichsel verbunden ist. Das eine der Kupplungsteile ist ein Kupplungsbolzen mit einer umlaufenden Nut und das andere eine den Kupplungsbolzen umgreifende Buchse. Ein Sicherungsstift kann in eine Führung in der Buchse derart eingesetzt und darin gesichert werden, dass der Sicherungsstift in die umlaufende Verriegelungsnut des in die Buchse eingesetzten Kupplungsbolzens eingreift und so den Kupplungsbolzen gegen ein axiales Herausrutschen aus der Buchse sichert. Außerdem ist aus der WO 2013/15678 bekannt, anstelle eines Sicherungsstiftes Federbügel vorzusehen, die nach Aufstecken der Buchse auf den Kupplungsbolzen in die Verriegelungsnut des Kupplungsbolzens eingreifen. Zum Lösen der Buchse von dem Kupplungsbolzen können die Federbügel über einen Druckknopf als Entriegelungsmittel aus der Verriegelungsnut herausgedrückt werden, so dass der Kupplungsbolzen wieder frei ist und aus der Buchse entfernt werden kann. Schließlich ist aus der WO 2013/15678 auch ein Schloss zum Blockieren des Entriegelungsmittels bzw. als Diebstahlschutz bekannt.

Aus der GB 27361 ist eine gattungsgemäße Kupplung zum Verbinden eines Motorrads mit einem Beiwagen bekannt. Dabei ist als Einsatzstück auf der einen Seite der Kupplung eine teilrunde Feder ausgebildet, die von der Seite in eine Federnut am Gegenstück der Kupplung eingeschoben wird. Federnutseitig ist eine Verriegelungswelle vorgesehene, die die halbrunde Feder im Verriegelungszustand gegen Verschieben in der Federnut blockiert. Dazu ist die Verriegelungswelle drehbar gelagert und weist einen Entriegelungsabschnitt auf, der in entsprechender Drehposition der Verriegelungswelle nicht in die Feder eingreift und einen Verriegelungsabschnitt, der in entsprechender Drehposition der Verriegelungswelle in die Feder eingreift und dort mit einer Aussparung an der Feder zur Verriegelung derer zusammenwirkt. Nachteilig dabei ist, dass die Kupplungsverbindung recht steif ist und Kräfte und Momente nur sehr begrenzt aufnehmen kann. Dokument GB 27361 offenbart den Oberbegriff des Anspruchs 1.

Hiervon ausgehend besteht eine Aufgabe der vorliegenden Erfindung darin, eine konstruktiv einfache Kupplung mit einer einfachen Handhabbarkeit bereitzustellen. Diese Aufgabe wird bei einer Kupplung der eingangs genannten Art mit den Merkmalen des Anspruchs 1 gelöst.

Ein wesentlicher Kern der vorliegenden Erfindung besteht in der im zweiten Kupplungsteil gelagerten Verriegelungswelle, die so ausgebildet und gelagert ist, dass ihr Verriegelungsabschnitt in die Verriegelungsnut des ersten Kupplungsteils eingreifen und so das erste Kupplungsteil und das zweite Kupplungsteil verriegeln kann, und dass die Verriegelungswelle die Verriegelungsnut und damit das erste Kupplungsteil durch eine einfache Drehung wieder freigeben kann, indem der Verriegelungsabschnitt aus der Verriegelungsnut herausgedreht wird. Mit einer derartigen Verriegelungswelle wird eine äußerst kompakte und robuste Bauweise der Kupplung möglich. Grundsätzlich ist es dabei egal, ob die Verriegelungsnut am Einsatzstück ausgebildet und die Verriegelungswelle mit der Hülse gekoppelt ist, oder ob die Verriegelungsnut in der Hülse ausgebildet ist und die Verriegelungswelle an dem Einsatzstück vorgesehen ist, wobei letztere Ausführung konstruktiv zwar möglich, aber deutlich aufwändiger ist.

Da die Verriegelungswelle lediglich gedreht werden muss, um das Einsatzstück in der Hülse zu verriegeln, besteht ein wesentlicher Vorteil der Erfindung darin, dass die zum Verbinden der Kupplungsteile benötigten Kräfte vergleichsweise sehr gering sind, und dennoch eine sichere Verbindung gewährleistet ist.

Die erfindungsgemäße Kupplung ist für eine Vielzahl von Verbindungen einsetzbar. So kann die erfindungsgemäße Kupplung gleichzeitig eine Gelenkfunktion übernehmen, und zwar insbesondere dann, wenn das Einsatzstück einen runden Querschnitt hat und in der Hülse drehbar gelagert ist. So kann die erfindungsgemäße Kupplung beispielsweise als Anhängerkupplung für Fahrradanhänger verwendet werden, um die Deichsel eines Fahrradanhängers an einem Fahrrad zu befestigen, wobei das eine der beiden Kupplungsteile fest mit dem Fahrrad und das andere der beiden Kupplungsteile an einem Ende der Deichsel ausgebildet ist. Auch kann die Kupplung verwendet werden, um eine Aufhängung für ein Buggyrad mit dem Rahmen eines Fahrradanhängers zu verbinden, wobei die Aufhängung des Buggyrads dann um eine im Wesentlichen vertikale Achse frei drehbar gelagert ist.

Es kann aber auch von Vorteil sein, wenn die Kupplung keinen Freiheitsgrad hat und insbesondere nicht als Gelenk ausgebildet ist. So kann das Einsatzstück auch einen unrunden, beispielsweise einen ovalen oder einen mehreckigen Querschnitt haben, der mit einem entsprechenden Hohlquerschnitt der Hülse so zusammenwirkt, dass sich die beiden Kupplungsteile, wenn sie verriegelt sind, nicht relativ zueinander bewegen können. Natürlich können auch Mittel vorgesehen sein, die im verriegelten Zustand alle etwaigen Freiheitsgrade der Kupplungsteile sperren. Eine solche erfindungsgemäße Kupplung ist beispielsweise zum lösbaren Verbinden oder Festsetzen der Deichsel am Fahrradanhänger geeignet, wobei das erste Kupplungsteil an einem Ende der Deichsel und das zweite Kupplungsteil am Rahmen des Fahrradanhängers ausgebildet sind.

Die Verriegelungswelle der erfindungsgemäßen Kupplung hat eine Rotationsachse, die im Wesentlichen quer zu einer Einschubrichtung des Einsatzstücks in die Hülse, vorzugsweise parallel zur Verriegelungsnut, angeordnet ist. Dies hat den wesentlichen Vorteil, dass der Verriegelungsabschnitt der Verriegelungswelle beim Einsetzen durch das Einsatzstück zur Seite geschoben werden kann. Die erfindungsgemäße Kupplung kann dabei noch kompakter ausgestaltet werden, wenn die Rotationsachse der Verriegelungswelle durch einen Abschnitt der Verriegelungsnut verläuft, wobei der Entriegelungsabschnitt eine in Bezug auf die Rotationsachse negative radiale Ausdehnung hat, dass also die Rotationsachse der Welle durch die Ausnehmung verläuft. Die Rotationsachse der Verriegelungswelle muss also nicht an dem ersten Kupplungsteil vollständig vorbeigeführt sein, sondern kann näher am ersten Kupplungsteil positioniert sein.

Bei der erfindungsgemäßen Kupplung ist als Mittel zum Drehen der Verriegelungswelle in die verriegelnde Position eine auf die Verriegelungswelle wirkende Feder, insbesondere eine Torsionsfeder, vorgesehen. So ist es möglich, dass der Verriegelungsabschnitt der Verriegelungswelle beim Einsetzen des Einsatzstücks in die Hülse durch das Einsatzstück entgegen einer Federkraft ausgelenkt wird und dann durch die gespannte Feder automatisch in die Verriegelungsnut des Einsatzstücks hineingedreht wird, sobald das Einsatzstück weit genug in die Hülse eingesetzt ist. Hierdurch ist ein äußerst einfaches Kuppeln der beiden Kupplungsteile gewährleistet.

Als Mittel zum Drehen der Verriegelungswelle in die verriegelnde Position können aber auch beispielsweise eine Kurbel oder ein Hebel vorgesehen sein, mit denen die Verriegelungswelle manuell gedreht werden kann.

Als Mittel zum Halten des Verriegelungsabschnitts in der verriegelnden Position kann vorzugsweise ein Anschlagelement an der Verriegelungswelle vorgesehen sein, das mit einem Anschlagelement am zweiten Kupplungsteil zusammenwirkt. Das Anschlagelement wirkt einem durch ein etwaiges Herausziehen des Einsatzstücks bedingten Herausdrehen des Verriegelungsabschnitts aus der Verriegelungsnut entgegen, so dass sich das erste Kupplungsteil und das zweite Kupplungsteil, wenn sie miteinander verriegelt sind, nicht mehr ohne weiteres voneinander lösen lassen.

Dabei ist es von Vorteil, wenn die Verriegelungswelle von den Anschlagelementen entgegen einer Federkraft in der verriegelnden Position gehalten wird, so dass vermieden wird, dass sich das Verriegelungselement beispielsweise aufgrund von Vibrationen innerhalb der Verriegelungsnut bewegen kann oder sich sogar daraus unbeabsichtigt löst. Die hierfür eingesetzte Feder kann die gleiche Feder sein, die als Mittel zum Drehen der Verriegelungswelle in die verriegelnde Position verwendet wird. Sie muss dann entsprechend vorgespannt sein.

Natürlich können auch andere Mittel zum Halten des Verriegelungsabschnitts eingesetzt werden, wie beispielsweise Rastmittel oder Greifer, die die Verriegelungswelle festhalten, wenn sie in der verriegelnden Position ist. Auch ist es möglich, Haltemittel vorzusehen, die einen Hebel oder eine Kurbel zum manuellen Drehen der Verriegelungswelle festhalten, sobald die Welle in ihrer verriegelnden Position ist.

Als Mittel zum Lösen der Verriegelungswelle aus ihrer verriegelnden Position kann sie in einer bevorzugten erfindungsgemäßen Ausgestaltung mindestens ein Entriegelungssegment mit einer an der Außenseite der Verriegelungswelle vorgesehenen Anschlagfläche aufweisen, die mit einem Auslöser zum Lösen der Verriegelungswelle aus der verriegelnden Position zusammenwirkt. Der Auslöser kann beispielsweise ein automatischer Betätiger sein, beispielsweise ein Hebel, der beim Einsetzen des Einsatzstücks in die Hülse entgegen einer Federkraft gespannt und verriegelt wird, wenn die Verriegelungswelle in ihrer verriegelnden Position ist, und manuell entriegelt werden kann, wobei der Hebel dann auf die Anschlagfläche wirkt und die Verriegelungswelle aus ihrer verriegelnden Position in eine entriegelte Position dreht.

Die als Mittel zum Lösen der Verriegelungswelle aus ihrer verriegelnden Position vorgesehene Anschlagfläche des Entriegelungssegments kann gleichzeitig als Anschlagelement zum Halten der Verriegelungswelle in ihrer verriegelnden Position eingesetzt werden, nämlich dann, wenn der Auslöser in einer Ausgangsposition derart fest steht, dass die Verriegelungswelle in ihrer verriegelnden Position mit der Anschlagfläche am Auslöser anliegt. Der Auslöser hat in diesem Fall neben der Auslösefunktion ebenso eine Haltefunktion als Anschlagelement des zweiten Kupplungsteils.

Die Anschlagfläche des Entriegelungssegments liegt vorzugsweise in einer Ebene, die die Rotationsachse der Verriegelungswelle schneidet, so dass die von einem Auslöser aufgebrachten Kräfte in Umfangsrichtung auf die Welle wirken.

In einer weiteren bevorzugten Ausgestaltung weist das Entriegelungssegment in einem in Betätigungsrichtung des Auslösers vor der Anschlagfläche liegenden Bereich eine Ausnehmung mit einer gegenüber dem Außenradius des Verriegelungsabschnitts geringeren radialen Ausdehnung auf. Dadurch kann der Auslöser nahe am Kern der Verriegelungswelle vorbei geführt werden, so dass eine kompaktere Bauweise möglich wird.

Als Mittel zum Lösen des Verriegelungsabschnitts aus der verriegelnden Position ist vorzugsweise ein manueller Betätiger vorgesehen. Als manuelle Betätiger kommen beispielsweise die bereits zuvor genannten Hebel oder Kurbeln in Betracht, mit denen die Verriegelungswelle auch manuell in ihre verriegelnde Position gedreht werden kann. Vorzugsweise wirkt der manuelle Betätiger als Auslöser mit der Anschlagfläche des Entriegelungsabschnitts der Verriegelungswelle zusammen. Bevorzugt, weil sehr einfach zu bedienen, ist als Mittel zum Lösen des Verriegelungsabschnitts aus seiner verriegelnden Position ein auf die Verriegelungswelle wirkender, insbesondere federnd gelagerter Druckknopf vorgesehen. Insbesondere bei der Ausgestaltung mit einem Druckknopf zeigt sich der besondere Vorteil der Verriegelungswelle der erfindungsgemäßen Kupplung. So ist es möglich, die Bewegungsrichtung des Druckknopfs in nahezu jeder Richtung, insbesondere in Einschubrichtung des Einsatzstücks in die Hülse, aber auch quer dazu, vorzusehen, ohne dass damit ein besonderer konstruktiver Aufwand verbunden wäre. So ist es beispielsweise ohne weiteres möglich, mit einem am Druckknopf ausgebildeten Anschlagelement auf einen entsprechenden Anschlag an der Verriegelungswelle einzuwirken. Verläuft die Betätigungsrichtung des Druckknopfs parallel zur Welle, können die Wirkflächen der Anschläge schräg ausgebildet sein, so dass der wellenseitige Anschlag bei Betätigen des Druckknopfs zur Seite gedrückt und die Verriegelungswelle damit in die gewünschte Richtung gedreht wird. Ist die Betätigungsrichtung des Druckknopfs quer zur Rotationsachse der Welle, verlaufen die zusammenwirkenden Anschlagflächen an Welle und Druckknopf vorzugsweise quer zur Betätigungsrichtung.

In einer besonders bevorzugten Ausgestaltung ist der am manuellen Betätiger ausgebildete Anschlag das an der Hülse am zweiten Kupplungsteil ausgebildete Anschlagelement zum Halten des Verriegelungsabschnitts in der verriegelnden Position. Damit hat der am manuellen Betätiger ausgebildete Anschlag eine Doppelfunktion, nämlich die des Haltens und des Lösens des Verriegelungsabschnitts aus seiner verriegelnden Position.

Als weitere Mittel zum Halten der Verriegelungswelle in und/oder Lösen der Verriegelungswelle aus ihrer verriegelnden Position kommt auch ein Ritzelgetriebe in Betracht. Beispielsweise kann ein manueller Betätiger wie beispielsweise ein Druckknopf oder ein automatischer Auslöser wie beispielsweise ein Motor mit einer Zahnstange versehen sein, die entweder unmittelbar oder mittelbar über ein Zwischenritzel mit einem an der Welle angeordneten Ritzel zusammenwirkt.

In noch einer bevorzugten Ausgestaltung der Erfindung weist die Kupplung ein Schloss auf, das ausgebildet ist, ein unbefugtes Lösen des Verriegelungsabschnitts aus der verriegelnden Position behindern zu können. Das Schloss kann beispielsweise so ausgebildet sein, dass es auf die Verriegelungswelle einwirken und diese im abgeschlossenen Zustand blockieren kann. Bevorzugt ist das Schloss ausgebildet, um ein Betätigen des manuellen Betätigers blockieren zu können.

Soll die erfindungsgemäße Kupplung mindestens einen Freiheitsgrad besitzen, beispielsweise für den Einsatz als Anhängerkupplung oder als Kupplung für die Anbindung einer Buggyradaufhängung an einem vorderen Teil eines Fahrradanhängerrahmens, ist das Einsatzstück vorzugsweise ein Kupplungsbolzen mit einer im Querschnitt im Wesentlichen kreisrunden Mantelfläche und mit mindestens einer zumindest teilweise umlaufenden Verriegelungsnut. Dadurch kann die Kupplung so ausgebildet sein, dass der Kupplungsbolzen um seine Längsachse herum in der Hülse drehbar ist.

Wie bereits erwähnt eignet sich die erfindungsgemäße Kupplung insbesondere als Anhängerkupplung für einen Fahrradanhänger, ebenso wie zur Anbindung der Aufhängung eines Buggyrades an einen vorderen Rahmenteil des Fahrradanhängers.

Auch ist die Kupplung geeignet, um die Deichsel am Rahmen eines Fahrradanhängers zu befestigen, wenn das eine der beiden Kupplungsteile ein Deichselende und das andere Kupplungsteil eine an einem Fahrradanhänger ausgebildete Deichselaufnahme ist. Bei dieser Ausführungsform ist vorzugsweise das fahrradanhängerseitige Ende der Deichsel als erstes Kupplungselement mit einer Verriegelungsnut ausgebildet und die Deichselaufnahme als zweites Kupplungselement. Bei einer solchen Kupplung haben das erste und das zweite Kupplungsteil in verriegeltem Zustand vorzugsweise keinen Freiheitsgrad.

Die erfindungsgemäße Kupplung ermöglicht es, eine Vielzahl von Anbauteilen des Fahrradanhängers durch einfaches Auf- oder Einstecken des einen Kupplungsteils auf oder in den anderen Kupplungsteil mit einem Fahrradanhänger zu verbinden, und, wenn jeweils ein Druckknopf vorgesehen ist, durch Betätigen des Druckknopfes vom Fahrradanhänger zu lösen. Damit wird der Umbau des Fahrradanhängers äußerst einfach, da jede Kupplung einem einheitlichen einfachen Bedienkonzept folgt. Hierdurch kann eine Fehlhandhabung durch den Benutzer weitestgehend vermieden werden.

Außerdem bietet die Basiskonstruktion der Erfindung mit einer Verriegelungswelle, die durch einfaches Drehen in eine Verriegelungsnut am Einsatzstück oder im Bereich der Hülse die Kupplung verriegeln kann, eine Vielzahl von Konstruktionsvariationen. Wird ein manueller Betätiger zum Lösen der Kupplung eingesetzt, kann er wahlweise so angeordnet sein, dass seine Betätigungsrichtung in Längsrichtung des Einsatzstücks oder quer dazu verläuft.

Soll die erfindungsgemäße Kupplung ein Schloss und einen Druckknopf aufweisen, und weist das Schloss einen Schließzylinder auf, kann der Schließzylinder wahlweise parallel zur Betätigungsrichtung des Druckknopfs angeordnet sein. In einer besonderen Ausführungsform ist der Schließzylinder im Druckknopf gelagert. In einer weiteren Alternative ist der Schließzylinder quer zur Betätigungsrichtung des Druckknopfs gelagert.

Im Folgenden wird die Erfindung anhand von Figuren, in denen bevorzugte Ausführungsbeispiele der Erfindung dargestellt sind, näher erläutert.

Es zeigen
- Fig. 1: eine perspektivische Ansicht einer erfindungsgemäßen Kupplung als Anhängerkupplung;
- Fig. 2: eine Ansicht von einzelnen Bauteilen der in Figur 1 dargestellten Kupplung ;
- Fig. 3: eine Seitenansicht eines Einsatzstücks der Kupplung;
- Fig. 4: a bis c verschiedene perspektivische Ansichten einer in Figur 2 dargestellten Verriegelungswelle;
- Fig. 4d: die in Figur 2 dargestellte Verriegelungswelle im Querschnitt;
- Fig. 5: eine perspektivische Ansicht eines in Fig. 2 dargestellten Druckknopfs;
- Fig. 6: eine perspektivische Ansicht eines in Fig. 2 dargestellten Schließzylinders;
- Fig. 7: eine Ansicht einiger Teile der in den Figuren 1 und 2 dargestellten Anhängerkupplung zur Verdeutlichung ihrer Freiheitsgrade;
- Fig. 8: eine perspektivische Ansicht einer weiteren erfindungsgemäßen Kupplung zur Verbindung einer Aufhängung für ein Buggyrad mit einem Rahmen eines Fahrradanhängers;
- Fig. 9: eine Ansicht von einzelnen Bauteilen der in Figur 8 dargestellten Kupplung;
- Fig. 10: eine Ansicht eines in Fig. 9 dargestellten Kupplungsbolzens als Einsatzstück;
- Fig. 11: eine perspektivische Ansicht einer in Figur 9 dargestellten Hülsenaufnahme der Kupplung;
- Fig. 12: eine perspektivische Ansicht einer in Figur 9 dargestellten Hülse;
- Fig. 13 a und b: perspektivische Ansichten einer in Fig. 9 dargestellten Verriegelungswelle;
- Fig. 13c: eine geschnittene perspektivische Ansicht der in den Figuren 13a und b dargestellten Verriegelungswelle;
- Fig. 14: eine Ansicht eines in Fig. 9 dargestellten Druckknopfs;
- Fig. 15a und b: ein Prinzip einer Anordnung verschiedener Bauteile einer erfindungsgemäßen Kupplung;
- Fig. 16a und b: ein weiteres Prinzip einer Anordnung verschiedener Bauteile einer erfindungsgemäßen Kupplung; und
- Fig. 17a bis c noch: ein Prinzip einer Anordnung verschiedener Bauteile einer erfindungsgemäßen Kupplung.

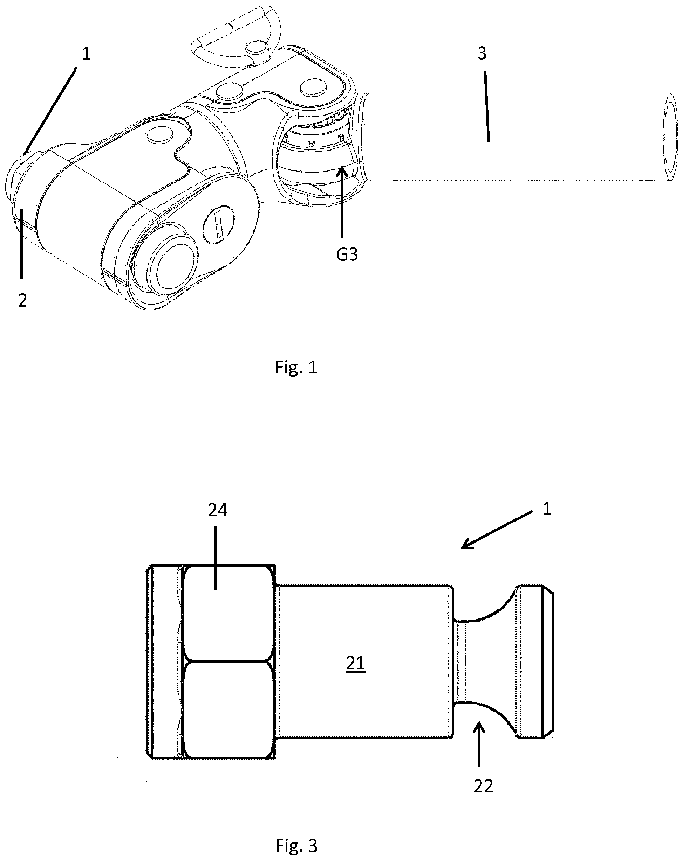

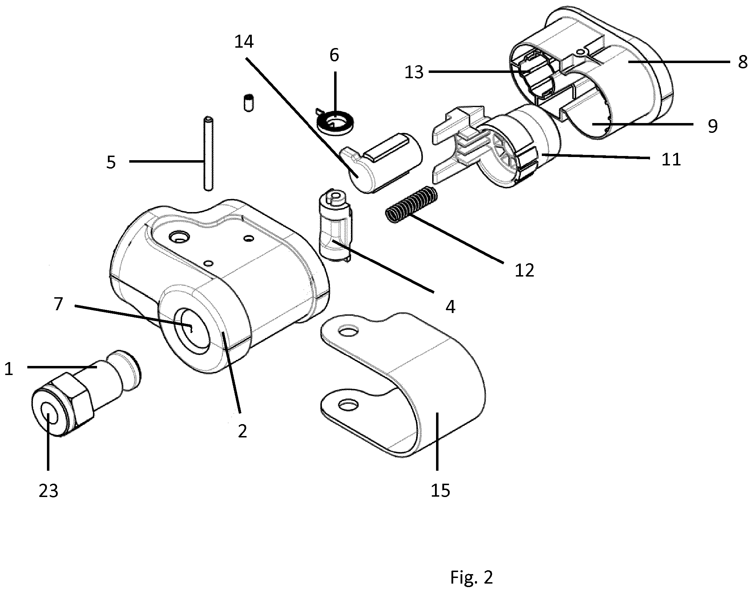

Die in Figur 1 komplett und in Figur 2 mit einzelnen Teilen dargestellte erfindungsgemäße Anhängerkupplung für einen Fahrradanhänger weist ein als Kupplungsbolzen 1 ausgebildetes Einsatzstück und eine in einem Kupplungsgehäuse 2 ausgebildete Hülse (nicht dargestellt) auf. Der Kupplungsbolzen 1 ist mit einem Fahrrad verbindbar, beispielsweise, indem er auf ein Gewinde an einem Ende einer Radachse des Fahrrades aufgeschraubt wird. Das Kupplungsgehäuse 2 ist über weitere Elemente der Kupplung mit einer Deichsel 3 verbunden.

Im Kupplungsgehäuse 2 sitzt eine Verriegelungswelle 4, die auf einer Achse 5 gelagert und durch eine Torsionsfeder 6 mit einer Federkraft beaufschlagt ist. Während das Kupplungsgehäuse 2 auf einer Seite für den Kupplungsbolzen 1 eine Öffnung 7 als Zugang zur im Kupplungsgehäuse 2 ausgebildeten Hülse aufweist, ist es auf der gegenüberliegenden Seite durch einen Deckel 8 verschlossen. Im Deckel 8 ist eine Aufnahme 9 samt Führung für einen Druckknopf 11 ausgebildet, der im Deckel in Richtung der Hülse entgegen der Kraft einer Feder 12 beweglich ist. Außerdem weist der Deckel 8 eine Aufnahme 13 für einen Schließzylinder 14 auf, der parallel zum Druckknopf 11 angeordnet ist. Das Kupplungsgehäuse 2, das in dem dargestellten bevorzugten Ausführungsbeispiel ein Kunststoffteil ist, ist durch ein es teilweise umgreifendes Metallblech 15 verstärkt.

Der Kupplungsbolzen 1, der auch in Figur 3 dargestellt ist, weist an seinem in Einschubrichtung vorderen Teil einen zylindrischen Abschnitt 21 auf, in dessen in Einschubrichtung vorderes Ende eine außen umlaufende Verriegelungsnut 22 eingelassen ist. Die hintere Wandung der Verriegelungsnut verläuft im Wesentlichen senkrecht zur Längsachse des Kupplungsbolzens 1. In Einschubrichtung beschreibt die Wandung der Verriegelungsnut dann einen Teilkreisabschnitt. Der Radius des Teilkreisabschnitts ist in etwa gleich dem Außenradius des Verriegelungsabschnitts im zentralen Teil der Verriegelungswelle 4. In die in Einschubrichtung hintere Stirnseite des Kupplungsbolzens 1 ist eine Gewindebohrung 23 eingelassen. So kann der Kupplungsbolzen 1 beispielsweise auf das Gewinde eines Endes einer Hinterradachse eines Fahrrads oder auf einen an einem Fahrradrahmen montierten Gewindebolzen aufgeschraubt werden. Um aufgeschraubt werden zu können, weist der Kupplungsbolzen 1 an dem gewindebohrungsseitigen Ende einen Außensechskant 24 auf. Die in Einschubrichtung vordere Kante des Außensechskants 24 dient als Begrenzung des Einschubwegs des Kupplungsbolzens in die Hülse im Kupplungsgehäuse 2. Der Kupplungsbolzen 1 dient somit als Einsatzstück und ist das erste der beiden miteinander zu verbindenden erfindungsgemäßen Kupplungsteile im Sinne der beanspruchten Erfindung.

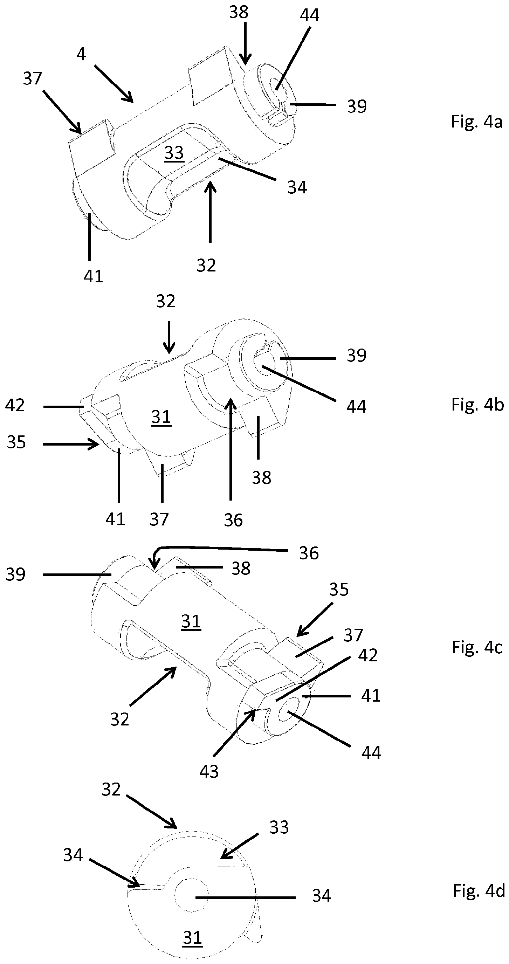

In den Figuren 4 a bis c sind verschiedene perspektivische Ansichten und in Figur 4d ein Querschnitt der Verriegelungswelle 4 dargestellt, die auf einem zylindrischen Grundkörper basiert. In einem in Richtung der Längsachse der Welle mittleren Riegelsegment weist sie in Umlaufrichtung einen Verriegelungsabschnitt 31 auf, der eine im Querschnitt teilkreisförmige Mantelfläche hat, und eine Ausnehmung als Entriegelungsabschnitt 32 auf. Der Entriegelungsabschnitt 32 wird dadurch gebildet, dass über nahezu die gesamte Breite der Welle Material entfernt wird. Die Bodenkontur des Entriegelungsabschnitts 32 weist zwei im Wesentlichen ebene Flächen 33, 34 auf, von denen sich die eine Fläche 33 in der Querschnittsdarstellung der Figur 4d von der Außenseite des zylindrischen Grundkörpers bis etwa oberhalb der Rotationsachse der Welle und die andere Fläche 34, tiefer und links etwa radial zur Rotationsachse verläuft. Die Flächen 33, 34 der Bodenkontur sind über eine kreisbogenförmige Mantelfläche miteinander verbunden. Dabei dient die Fläche 34 als Kontaktfläche für das vordere Ende des Kupplungsbolzens 1, wenn dieser in das Kupplungsgehäuse 2 eingeschoben wird, so dass die Verriegelungswelle 4 durch das Einschieben des Kupplungsbolzens 1 um ihre Achse gedreht wird. Die Ausnehmung ist dabei derart, dass der zylindrische Abschnitt 21 des Kupplungsbolzens 1 am Kern der Verriegelungswelle 4 vorbei bewegt werden kann.

Zu beiden Seiten des mittleren Riegelsegments schließen sich jeweils ein Entriegelungssegment an, das benachbart zum Verriegelungsabschnitt 31 des Riegelsegments eine Ausnehmung 35, 36 mit einem gegenüber dem des zylindrischen Grundkörpers geringeren Außenradius aufweist. Der eine Rand der Ausnehmung ist als radiale verlaufende Anschlagfläche 37, 38 ausgebildet, die etwas über den Außenmantel des zylindrischen Grundkörpers übersteht. Die Anschlagflächen 37, 38 wirken in gleicher Umfangsrichtung wie der die Kontaktfläche 34 bildende Abschnitt des Entriegelungsabschnitts 32. Sie sind dazu vorgesehen, mit Stiften 52, 53, die am Druckknopf 11 ausgebildet sind, zusammenzuwirken, um die Verriegelungswelle 4 aus einer verriegelnden Position zu lösen. Dabei sind die Ausnehmungen 35, 36 derart, dass die Stifte 52, 53 auf ihrer Wegstrecke zum Entriegeln der Verriegelungswelle frei am Kern der Verriegelungswelle vorbei bewegt werden können.

An einer der Stirnseiten der Verriegelungswelle 4 ist ein an einer Seite geschlitztes Ringstück 39 ausgebildet, das als Sitz für die Torsionsfeder 6 dient. Das gegenüberliegende Wellenende 41 hat einen gegenüber dem zylindrischen Grundkörper kleineren Durchmesser und ist mit einem bis zur äußeren Mantelfläche des zylindrischen Grundkörpers ragenden Klinkenstück 42 ausgebildet. Eine Seite des Klinkenstücks bildet eine radiale Anschlagfläche 43, die in gleicher Umfangsrichtung wie die Anschlagflächen 37, 38 wirkt. Die Anschlagfläche 43 wirkt mit einem entsprechenden, im Kupplungsgehäuse 2 ausgebildeten Anschlag zusammen und dient dazu, die Verriegelungswelle 4 entgegen der Kraft der vorgespannten Torsionsfeder 6 in einer Ausgangsposition zu halten, wenn der Kupplungsbolzen 1 nicht in die Hülse eingesetzt ist.

Schließlich weist die Verriegelungswelle 4 eine durchgehende zentrale Bohrung 44 auf, in die die Achse 5 aufgenommen wird, mit der die Verriegelungswelle 4 im Kupplungsgehäuse 2 gelagert ist.

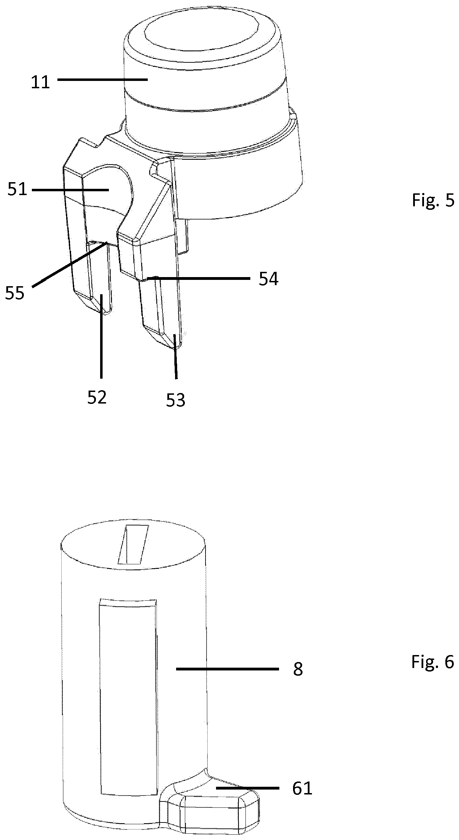

Der auch in Figur 5 dargestellte Druckknopf 11 ist im Deckel 8 gelagert und kann innerhalb des Deckels entgegen der Kraft der Feder 12 betätigt werden. An einer Seite des Druckknopfs 11 ist ein konkaves Plattenstück 51 vorgesehen, an dessen Seiten zwei in Betätigungsrichtung des Druckknopfs nach unten auskragende Stifte 52, 53 ausgebildet sind. Die Länge und der Abstand der Stifte 52, 53 zueinander ist derart, dass sie mit den Anschlagflächen 37, 38 der Verriegelungswelle 4 zusammenwirken können, wenn der Kupplungsbolzen 1 in das Kupplungsgehäuse 2 eingesetzt ist. Die unteren Enden der Stifte sind abgeschrägt. Die Anschlagflächen 37, 38 der Verriegelungswelle liegen hieran plan an, wenn die Verriegelungswelle in ihrer Ausgangsposition ist. Der Stift 53 weist eine Nase 54 auf, deren Unterseite zur Verriegelung des Druckknopfes gegen ungewolltes Öffnen durch ein Schloss dient.

In der Kavität der Platte 51 sitzt der ebenso im Deckel 8 gelagerte Schließzylinder 14. An seiner Unterseite weist der Schließzylinder, der auch in Figur 6 dargestellt ist, einen seitlich auskragenden Riegel 61 auf, der mit Betätigen des Schlosses unter die Nase 54 am Stift 53 des Druckknopfs 11 gedreht werden kann, so dass der Druccknopf gegen ein Herunterdrücken gesperrt ist.

Das Kupplungsgehäuse 2 und die darin gelagerten Teile der Kupplung bilden das zweite Kupplungsteil im Sinne der beanspruchten Erfindung.

Sind die beiden Kupplungsteile voneinander getrennt, wird die durch die Torsionsfeder 6 vorgespannte Verriegelungswelle 4 durch die Anschlagfläche 43 in einer Ausgangsposition im Kupplungsgehäuse 2 gehalten, in der die Kontaktfläche 33 innerhalb der Einführstrecke des Kupplungsbolzens 1 in der Hülse liegt und dem Kupplungsbolzen 1 entgegensteht. Gleichzeitig liegen die Anschlagflächen 37, 38 an den Stiften 52, 53 an. Wird das zweite Kupplungsteil auf den Kupplungsbolzen 1 aufgesetzt, drückt der Kupplungsbolzen 1 die Kontaktfläche 34 zur Seite, so dass die Verriegelungswelle 4 entgegen der Federkraft der Torsionsfeder 6 gedreht wird und der Entriegelungsabschnitt 31 der Verriegelungswelle 4 den Weg für den Kupplungsbolzen 1 freigibt. Das Kupplungsgehäuse 2 kann so weit auf den Kupplungsbolzen 1 aufgesteckt werden, bis dass die Kontaktfläche 43 samt daran angrenzendem Verriegelungsabschnitt 31, angetrieben durch die Torsionsfeder 6, in die im Kupplungsbolzen 1 ausgebildete umlaufende Verriegelungsnut 22 einschwenken kann. In dieser Position ist der Kupplungsbolzen 1 in der Hülse verriegelt. Er kann nicht weiter in das Kupplungsgehäuse 2 eingeschoben werden, da der Außensechskant 24 des Kupplungsbolzens am Kupplungsgehäuse 2 bzw. der Hülse anliegt und ein weiteres Einschieben verhindert. Alternativ oder in Ergänzung zu einem Anschlag für den Außensechskant am Kupplungsgehäuse bzw. der Hülse kann auch ein Anschlag für das vordere Ende des Kupplungsbolzens im Kupplungsgehäuse vorgesehen sein, um den Einschubweg des Kupplungsbolzens in das Kupplungsgehäuse zu begrenzen. Der Kupplungsbolzen kann in dieser Position auch nicht wieder aus dem Kupplungsgehäuse herausgezogen werden, da eine hierfür notwendige Drehung der Verriegelungswelle 4 durch wahlweise die Anschlagfläche 43 und zugehörigen Anschlag im Kupplungsgehäuse und /oder die Stifte 52, 53, die mit den Anschlagflächen 37, 38 der Verriegelungswelle zusammen wirken, unterbunden ist. Der Kupplungsbolzen 1 kann aus dem Kupplungsgehäuse wieder gelöst werden, wenn der Druckknopf 11 betätigt wird. Hierdurch wird die Verriegelungswelle so weit verdreht, dass der Entriegelungsabschnitt 32 den Kupplungsbolzen 1 wieder freigibt und er herausgezogen werden kann.

Die Betätigungskräfte zum Schließen und Lösen der Kupplung hängen dabei maßgeblich von der Federkonstante und der Vorspannung der Torsionsfeder sowie von dem Abstand des mit dem Kupplungsbolzen 1 in Eingriff stehenden Teils der Kontaktfläche 34 zur Rotationsachse der Verriegelungswelle 4 bzw. dem Abstand der Kontaktflächen der Stifte 52,53 auf den Anschlagflächen 37, 38 zur Rotationsachse der Verriegelungswelle 4 ab. Mit größeren Abständen werden die aufzubringenden Kräfte geringer. Bleibt die Tiefe der Verriegelungsnut im Kupplungsbolzen gleich, wird der Teilkreisabschnitt der Verriegelungswelle, der in die Verriegelungsnut eingreift, kleiner, so dass eine Vergrößerung des Durchmessers der Verriegelungswelle und damit eine Vergrößerung der Abstände der Wirkflächen zur Achse der Verriegelungswelle, die zu einer Verringerung der Betätigungskräfte führt, nicht zwangsläufig mit einer Verlängerung der Betätigungswege einhergeht. Die aufzubringenden Kräfte sind in jedem Fall vergleichsweise gering.

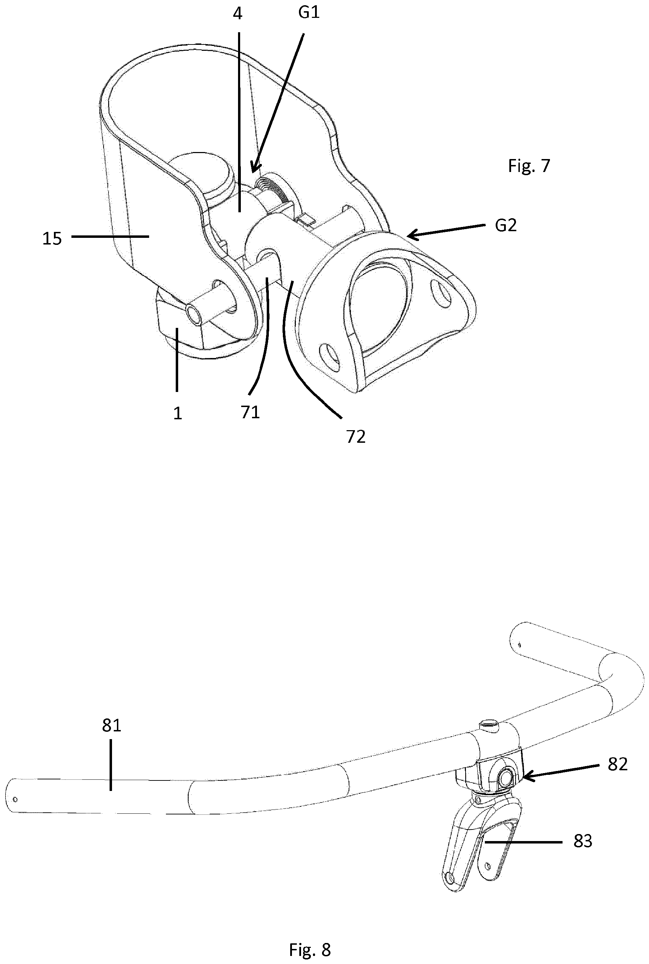

In Figur 7 sind einige Teile der Anhängerkupplung dargestellt, um die ersten zwei Freiheitsgrade der Kupplung zu verdeutlichen. Ein erster Freiheitsgrad G1 besteht in dem Gelenk 1, das durch den Kupplungsbolzen 1 und die Verriegelungswelle 4 gebildet wird. Er erlaubt eine Drehung von Kupplungsteilen um die Längsachse des Kupplungsbolzens. Ein zweiter Freiheitsgrad G3 entsteht dadurch, dass am freien Ende der Achse 72 ein Hülsenstück 73 aufgesetzt ist, das um die Achse 72 herum drehbar gelagert ist. Schließlich ist die Deichsel über ein Gelenk G3 (siehe Figur 1) verbunden, das einen weiteren Freiheitsgrad bildet.

Nachfolgend wird eine weitere Ausführungsform der Erfindung in Form einer Kupplung zur Anbindung eines Buggyrades an den Rahmen eines Fahrradanhängers beschrieben.

Figur 8 zeigt den vorderen Rahmenteil 81 eines Fahrradanhängers. In seiner Mitte ist eine erfindungsgemäße Kupplung 82 zur Verbindung einer Aufhängung 83 für ein Buggyrad mit dem Rahmenteil 81.

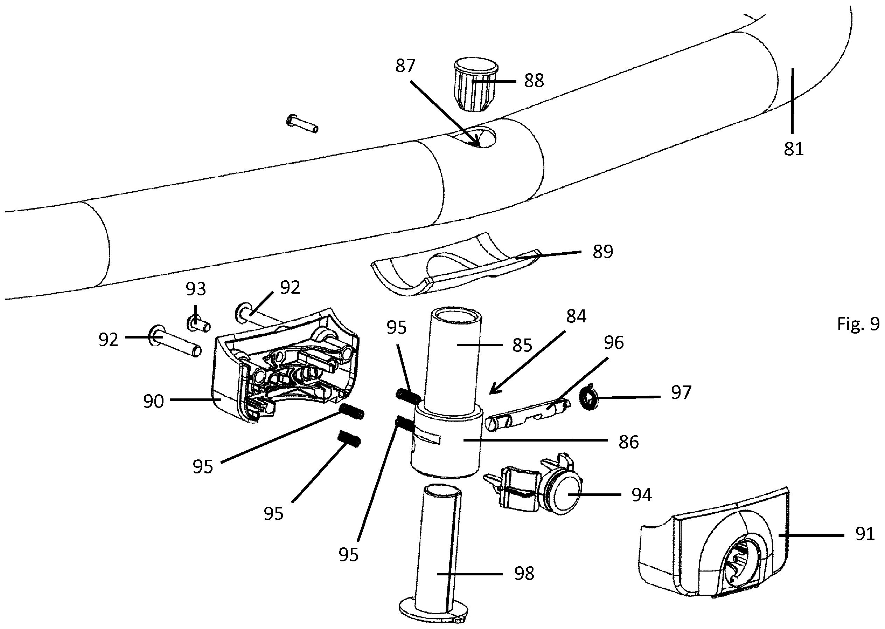

Einzelne Teile des zweiten Kupplungsteils 82 sind in Figur 9 dargestellt. Sie weist eine Hülsenaufnahme 84 mit einem oberen Abschnitt 85 und einem unteren Abschnitt 86 auf, das mit dem oberen Abschnitt 85 fest in einer Bohrung 87 im vorderen Rahmenteil 81 sitzt. Hierfür kann der obere Abschnitt 85 beispielsweise mit einer Presspassung in der Bohrung 87 sitzen, oder in diese eingeklebt oder mit dem vorderen Rahmenteil 81 verschweißt sein. Im vorliegenden Beispiel ist die Hülsenaufnahme 84 durch eine Schraubverbindung im Rahmenteil gesichert. Das obere Ende der Hülsenaufnahme 84 ist mit einer Kappe 88 verschlossen. Zwischen dem unteren Abschnitt 86 der Hülsenaufnahme 84 und der Unterseite des vorderen Rahmenteils 81 sitzt eine an das Profil des Rahmenteils angepasste Platte 89.

Um den unteren Abschnitt 86 der Hülsenaufnahme 84 herum sitzt ein Gehäuse mit einem hinteren Gehäuseteil 90 und einem vorderen Gehäuseteil 91, die über Schrauben 92 miteinander verbunden sind. Die Hülsenaufnahme 84 ist mit dem hinteren Gehäuseteil 90 über eine Schraube 93 verbunden. Im vorderen Gehäuseteil 91 sitzt ein Druckknopf 94, der gegen die Kraft von im Gehäuse sitzenden Druckfedern 95 betätigbar ist.

Im unteren Abschnitt der Hülsenaufnahme 84 sitzt eine Verriegelungswelle 96, die seitlich durch das hintere Gehäuseteil 90 in Position gehalten wird. An einer Seite der Verriegelungswelle 96 ist eine Torsionsfeder 97 zur Vorspannung der Verriegelungswelle vorgesehen. In der Hülsenaufnahme 84 sitzt außerdem eine Hülse 98.

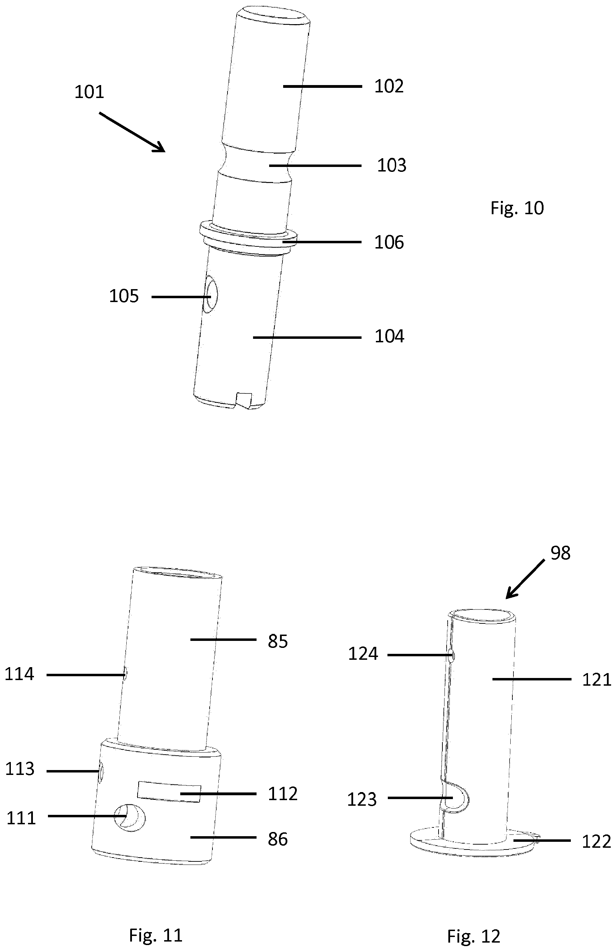

Das erste Kupplungsteil, nämlich ein mit der Aufhängung 83 für ein Buggyrad verbindbarer Kupplungsbolzen 101, ist in Figur 10 dargestellt. Er weist einen oberen zylindrischen Abschnitt 102 mit einer umlaufenden Verriegelungsnut 103, die einen teilkreisförmigen Querschnitt hat, und einen unteren zylindrischen Abschnitt 4 mit einer quer verlaufenden Durchgangsbohrung 105 zur Befestigung der Aufhängung 83 auf. Zwischen den Abschnitten ist ein umlaufender Kragen 106 vorgesehen, der als Begrenzung des Einschubweges in das zweite Kupplungsteil dient.

In den Figuren 11 und 12 sind die Hülsenaufnahme 84 und die Hülse 98 dargestellt. Der obere Abschnitt 85 der Hülsenaufnahme 84 ist ebenso wie der untere Abschnitt 86 hohlzylindrisch, wobei Innen- und Außendurchmesser des unteren Abschnitts 86 jeweils größer als die des oberen Abschnitts sind. In den unteren Abschnitt ist versetzt zur Längsachse der Hülsenaufnahme 84 eine durchgehende, die Wandung des unteren Abschnitts zweimal durchstoßende Bohrung 111 zur Aufnahme und Lagerung der Verriegelungswelle 96 vorgesehen, die in einer Ebene senkrecht zur Längsachse der Hülsenaufnahme 84 verläuft. Im Übrigen weist der untere Abschnitt 86 der Hülsenaufnahme 84 auf gegenüberliegenden Seiten zwei quer verlaufende Nuten auf, die mit Klammerelementen im hinteren Gehäuseteil 90 zusammenwirken, so dass das Gehäuse an der Hülsenaufnahme 84 gehalten und eindeutig positioniert ist. Außerdem ist im unteren Abschnitt 86 eine Gewindebohrung 113 für eine Schraubverbindung der Hülsenaufnahme 84 mit dem hinteren Gehäuseteil 90 vorgesehen. Der obere Abschnitt 85 weist ein radial verlaufendes Durchgangsloch 114 auf, das in der gleichen radial verlaufenden Ebene liegt wie die Gewindebohrung 113 und zur Befestigung der Hülsenaufnahme 84 im vorderen Rahmenteil 81 dient.

Die Hülse 98 weist einen zylindrischen Hohlkörper 121 mit einem an seiner Unterseite ausgebildeten, außen umlaufenden Kragen 122 auf. Im unteren Bereich des Hohlkörpers 121 ist eine seitliche Ausnehmung 123 vorgesehen, die mit der Bohrung 111 in der Hülsenaufnahme 84 korrespondiert und ein Eingreifen der Verriegelungswelle 96 in das Innere der Hülse 98 ermöglicht. Der Innendurchmesser der Hülse 98 entspricht dem Außendurchmesser des oberen Abschnitts 102 des Kupplungsbolzens 101. Der Außendurchmesser des zylindrischen Hohlkörpers 121 entspricht dem Innendurchmesser der Hülsenaufnahme 84. Im oberen Teil des zylindrischen Hohlkörpers 122 ist eine radial verlaufende Gewindebohrung vorgesehen, die, wenn die Hülse 98 in die Hülsenaufnahme eingesetzt ist, mit der Bohrung 114 fluchtet und der Verschraubung beider Teile mit dem vorderen Rahmenteil 81 dient.

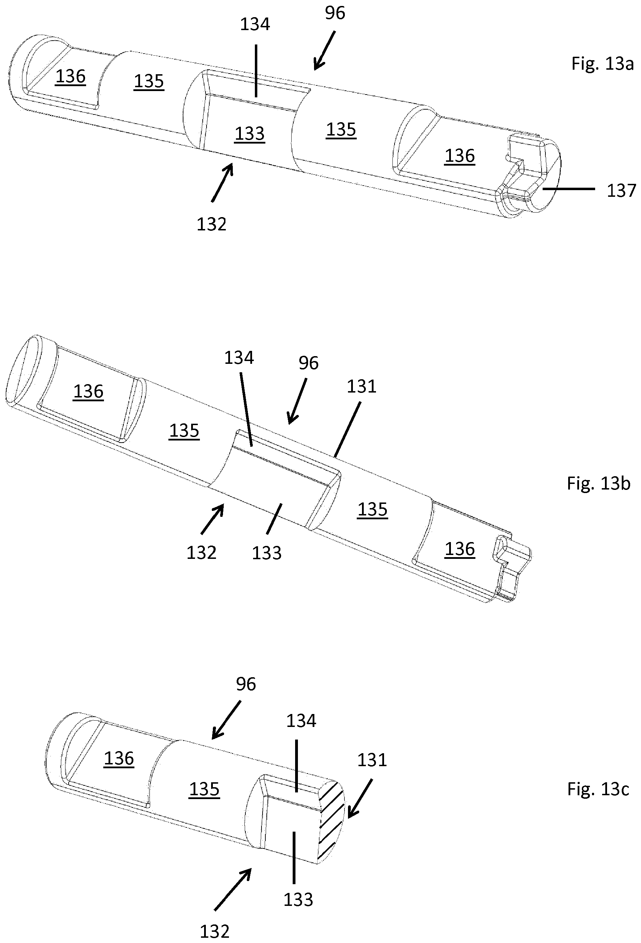

Die in den Figuren 13a bis 13c dargestellte Verriegelungswelle 96 weist in einem mittleren Riegelsegment in Umlaufrichtung einen Verriegelungsabschnitt 131, der eine im Querschnitt teilkreisförmige Mantelfläche hat, und eine Ausnehmung auf, die als Entriegelungsabschnitt 132 dient. Der Entriegelungsabschnitt 132 wird dadurch gebildet, dass über nahezu die gesamte Breite der Welle Material entfernt wird, wodurch zwei in einem stumpfen Winkel zueinander stehende ebene Flächen 133, 134 gebildet werden. Die Fläche 134 dient dabei als Kontaktfläche für das vordere Ende des Kupplungsbolzens 101.

Seitlich des zentralen Teils der Verriegelungswelle 96 befindet sich jeweils ein vollrunder Abschnitt 135, mit denen die Verriegelungswelle in der Bohrung 111 der Hülsenaufnahme 84 sitzt. Außen an den vollrunden Abschnitten 135 schließen sich Anschlagabschnitte mit Anschlagflächen 136 an, die in einer Ebene liegen, die parallel zu einer durch die Rotationsachse der Welle und in einem spitzen Winkel zur Fläche 133 steht. An einer Stirnseite der Verriegelungswelle 96 ist eine Aufnahme 137 für eine Torsionsfeder ausgebildet.

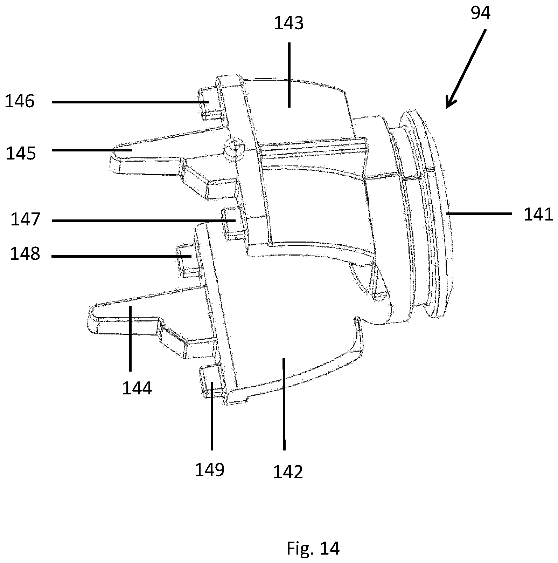

Der in Figur 14 dargestellte Druckknopf weist seitlich neben dem Betätigungsknopf 141 zwei Plattenelemente 142, 143 auf, die gemeinsam halbkreisförmig angeordnet sind, um die Hülsenaufnahme 84 im Gehäuse seitlich zu umgreifen. An den freien Enden der Plattenelemente 142, 143 sind jeweils ein Anschlagstift 144, 145 sowie darüber und darunter jeweils ein Steg 146, 147, 148, 149 zur Fixierung einer Druckfeder vorgesehen.

Sind die beiden Kupplungsteile voneinander getrennt, wird die durch die Torsionsfeder 97 vorgespannte Verriegelungswelle 96 durch die Anschlagstifte 144, 145, die auf den Anschlagflächen 136 am Rand der Verriegelungswelle 96 aufstehen, in einer Ausgangsposition im Gehäuse gehalten. Die Verriegelungswelle 96 ist dabei so positioniert, dass ihre Kontaktfläche 134 innerhalb der Einschubstrecke des Kupplungsbolzens 101 in der Hülse 89 liegt und dem Kupplungsbolzen 1 entgegensteht. Wird der Kupplungsbolzen 101 in das Gehäuse eingesetzt, drückt der Kupplungsbolzen 101 die Kontaktfläche 134 zur Seite, so dass die Verriegelungswelle 96 entgegen der Federkraft der Torsionsfeder 97 gedreht wird und der Entriegelungsabschnitt 132 der Verriegelungswelle 96 den Weg in der Hülse 89 für den Kupplungsbolzen 101 freigibt. Der Kupplungsbolzen 101 kann so weit in die Hülse 89 hinein gesteckt werden, bis dass die Kontaktfläche 134 samt daran angrenzendem Verriegelungsabschnitt 131, angetrieben durch die Torsionsfeder 97, in die im Kupplungsbolzen 101 ausgebildete umlaufende Verriegelungsnut 103 einschwenken kann, wobei die Verriegelungswelle 96 wieder in ihre Ausgangsposition zurückspringt. In dieser Position ist der Kupplungsbolzen 101 in der Hülse 89 verriegelt. Er kann weder weiter in die Hülse 89 eingeschoben werden, da der Kragen 106 des Kupplungsbolzens 101 nicht in die Hülse 89 eingeschoben werden kann, und kann auch nicht wieder aus dem Kupplungsgehäuse herausgezogen werden, da eine hierfür notwendige Drehung der Verriegelungswelle 96 durch das Zusammenwirken der Anschlagsflächen 136 der Verriegelungswelle 96 und den Anschlagstiften 144, 145 des Druckknopfs 94 unterbunden ist. Der Kupplungsbolzen 101 kann aus der Hülse 89 wieder gelöst werden, wenn der Druckknopf 94betätigt wird. Hierdurch wird die Verriegelungswelle 96 so weit entgegen der Kraft der Torsionsfeder 97 verdreht, dass der Entriegelungsabschnitt 132 den Kupplungsbolzen 101 wieder freigibt und er herausgezogen werden kann.

In diesem Ausführungsbeispiel hat die Kupplung lediglich einen Freiheitsgrad. So kann sich der Kupplungsbolzen 101 innerhalb der Hülse 89 frei drehen.

Im Folgenden werden unterschiedliche konstruktive Möglichkeiten der Anordnung des Druckknopfs und des Schlosses bzw. Schließzylinders in Bezug zum Kupplungsbolzen und der darein eingreifenden Verriegelungswelle gezeigt.

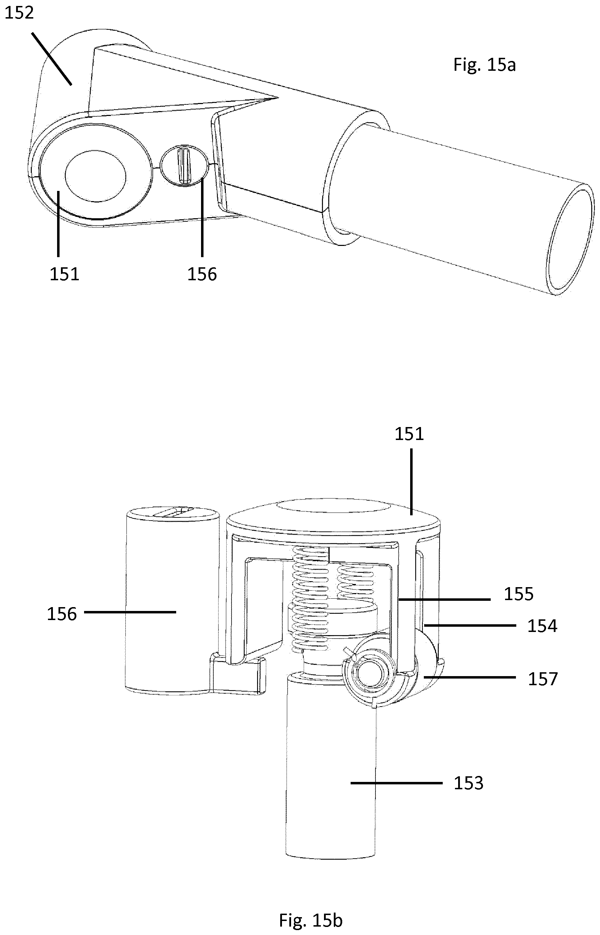

In den Figuren 15a und b ist zu sehen, dass der Druckknopf 151 im Kupplungsgehäuse 152 mit dem Kupplungsbolzen 152 fluchtend angeordnet ist, so dass seine Anschlagstifte 154, 155 parallel zur Längsachse des Kupplungsbolzens 152 bewegt werden. Der Schließzylinder 156 ist im Kupplungsgehäuse 152 neben dem Druckknopf 151 angeordnet. Die gezeigte Anordnung von Druckknopf und Schließzylinder entspricht im Wesentlichen der Anordnung der in den Figuren 1 bis 8 dargestellten Ausführungsform, mit dem einzigen Unterschied, dass die Verriegelungswelle 157 anders als bei der Ausführungsform der Figuren 1 bis 8 in Bezug zum Kupplungsbolzen nicht auf der Seite des Schließzylinders, sondern auf der dem Schließzylinder gegenüber liegenden Seite des Kupplungsbolzens angeordnet ist, und die Anschlagstifte 154, 155 deshalb anders am Druckknopf 151 angeordnet sind.

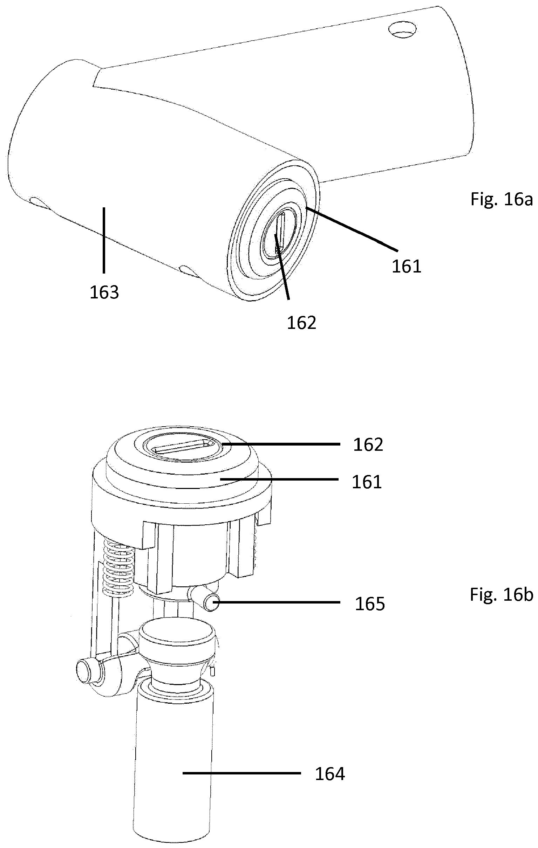

Die prinzipielle Anordnung der Figuren 16a und b unterscheidet sich von der der Figuren 15a und b insbesondere dadurch, dass sowohl der Druckknopf 161, als auch der Schließzylinder 162 im Kupplungsgehäuse 163 fluchtend zum darin einzusetzenden Kupplungsbolzen 164 angeordnet sind, wobei der Schließzylinder 162 im Druccknopf 161 gelagert und von diesem ringförmig umgeben ist. In dieser Ausführungsform ist es zweckmäßig, wenn der unten am Schließzylinder angeordnete Riegel 61 zum Sperren des Druckknopfs 161 mit einem im Kupplungsgehäuse ausgebildeten Absatzstück zusammenwirkt.

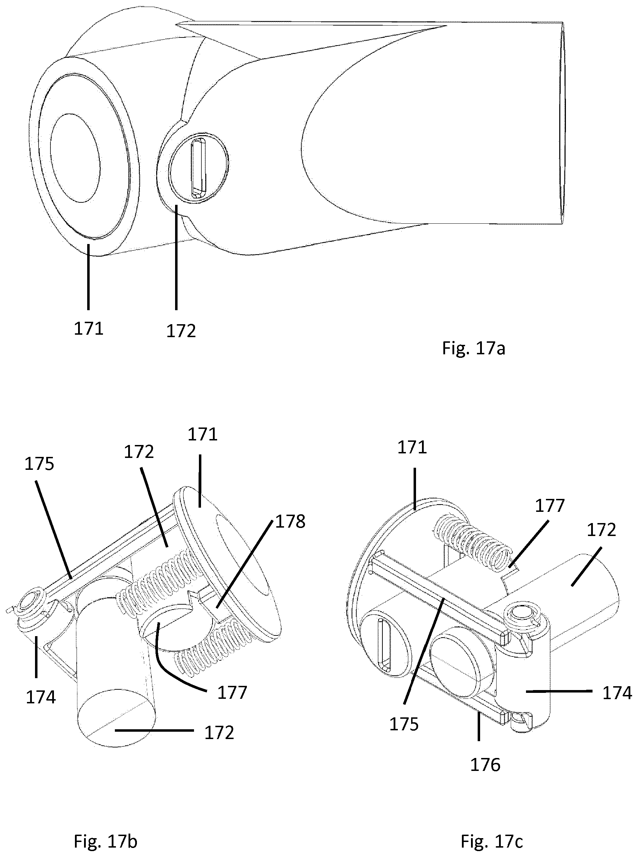

Die in den Figuren 17a bis c dargestellte Anordnung unterscheidet sich prinzipiell in zwei Aspekten von den beiden zuvor beschriebenen Anordnungen. Zum einen ist der Druckknopf 171 quer zur Längsachse des Kupplungsbolzens 172 angeordnet. Zum anderen liegt der Schließzylinder 173 zwischen Druckknopf 171 und Kupplungsbolzen 172, ebenso quer zur Betätigungsrichtung des Druckknopfs 171. Die Anordnung des Druckknopfs 171 quer zur Längsachse des Kupplungsbolzens 172 bedingt, wenn überhaupt, kaum Änderungen in der Gestaltung der Verriegelungswelle 174. Es kann, abhängig von der gewählten Länge der Stifte 175, 176 des Druckknopfes 171, lediglich eine Anpassung der Lage der Anschlagflächen der Verriegelungswelle für die Stifte des Druckknopfs in Bezug zur Lage des Entriegelungsabschnitts der Verriegelungswelle notwendig sein.

Zum Sperren des Druckknopfs 171 ist an der Unterseite des Schließzylinder 172 seitlich ein nach unten kragendes Sperrelement 177 vorgesehen, das durch den Schließzylinder 172 längs oder quer zur Bewegungsrichtung des Druckknopfes 171 ausgerichtet werden kann. Steht das Sperrelement 177 quer zur Bewegungsrichtung des Druccknopfs, liegt er an einer an der Unterseite des Druckknopfs angeordneten Nase 178 an und sperrt damit den Druckknopf.

Es sind eine Vielzahl von Variationen dieser Anordnungen möglich. So kann grundsätzlich auf einen Schließzylinder verzichtet werden, wenn ein Diebstahlschutz nicht benötigt wird. Wird ein Schließzylinder verwendet, kann er in jeder Variante quer zum Druckknopf angeordnet werden, wahlweise zwischen Druckknopf und Kupplungsbolzen (Einsatzstück), oder auch im Wesentlichen seitlich zum Druckknopf.

Auch im Übrigen sind die Variationsmöglichkeiten bei der Konstruktion einer erfindungsgemäßen Kupplung nicht auf die in den Figuren dargestellten und beschriebenen Ausführungsbeispiele beschränkt. Wie bereits eingangs erwähnt, müssen die Einsatzstücke der Kupplung aber keinen kreisrunden Querschnitt haben, und können auch eckig oder unrund ausgebildet sein, und zwar insbesondere dann, wenn kein Freiheitsgrad in der Kupplung benötigt wird. Auch ist es möglich, nicht das Einsatzstück, sondern die Hülse mit einer Verriegelungsnut zu versehen und das Einsatzstück mit einer Verriegelungswelle samt Mitteln zum Drehen des Verriegelungsabschnitts der Verriegelungswelle in die verriegelnde Position, zum Halten des Verriegelungsabschnitts in der verriegelnden Position und zum Lösen des Verriegelungsabschnitts aus der verriegelnden Position zu versehen.

## Patentansprüche

1. Kupplung zum Verbinden und/oder Zusammenhalten zweier Teile, insbesondere für einen Fahrradanhänger, mit einem ersten und einem zweiten Kupplungsteil, die zusammenwirken und voneinander lösbar sind, von denen das eine ein mit dem einen der Teile verbundenes Einsatzstück (1) und das andere eine mit dem anderen der Teile verbundene Hülse (2) ist, wobei die Hülse (2) geeignet ist, das Einsatzstück (1) zumindest teilweise zu umgreifen, und wobei das erste Kupplungsteil mindestens eine Verriegelungsnut (22, 103) aufweist, wobei am bzw. im zweiten Kupplungsteil mindestens eine Verriegelungswelle (4, 96) gelagert ist, die zumindest ein Riegelsegment aufweist, das in Umfangsrichtung mindestens einen Verriegelungsabschnitt (31, 131) und einen Entriegelungsabschnitt (32, 132) aufweist, wobei der Verriegelungsabschnitt (31, 131) eine größere radiale Ausdehnung als der Entriegelungsabschnitt (32, 132) aufweist, wobei die Verriegelungswelle (4, 96) eine Rotationsachse hat, die im Wesentlichen quer zu einer Einschubrichtung des Einsatzstücks in die Hülse, vorzugsweise parallel zur Verriegelungsnut (22, 103), angeordnet ist und die Verriegelungswelle (4, 96) so angeordnet ist, dass der Verriegelungsabschnitt (31, 131) in die Verriegelungsnut (22, 103) eingreifen kann, wenn das Einsatzstück (1) in die Hülse (2) eingesetzt ist, und der Entriegelungsabschnitt (32, 132) nicht in die Verriegelungsnut (22, 103) eingreifen kann, wobei Mittel zum Drehen des Verriegelungsabschnitts (31, 131) in die verriegelnde Position, zum Halten des Verriegelungsabschnitts (31, 131) in der verriegelnden Position und zum Lösen des Verriegelungsabschnitts (31, 131) aus der verriegelnden Position vorgesehen sind, **dadurch gekennzeichnet, dass** als Mittel zum Drehen der Verriegelungswelle (4, 96) in die verriegelnde Position eine auf die Verriegelungswelle (4, 96) wirkende Feder vorgesehen ist, und die Verriegelungswelle so angeordnet ist, dass der Verriegelungsabschnitt der Verriegelungswelle beim Einsetzen des Einsatzstücks (1) in die Hülse (2) durch das Einsatzstück (1) entgegen einer Federkraft der Feder ausgelenkt wird und dann durch die gespannte Feder automatisch in die Verriegelungsnut des Einsatzstücks (1) hineingedreht wird, sobald das Einsatzstück (1) weit genug in die Hülse (2) eingesetzt ist.

2. Kupplung nach Anspruch 1, **dadurch gekennzeichnet, dass** die Rotationsachse durch einen Abschnitt der Verriegelungsnut verläuft, wobei der Entriegelungsabschnitt eine in Bezug auf die Rotationsachse negative radiale Ausdehnung hat.

3. Kupplung nach Anspruch 1 oder 2, **dadurch gekennzeichnet, dass** die auf die Verriegelungswelle (4, 96) wirkende Feder eine Torsionsfeder (6, 97) ist.

4. Kupplung nach einem der vorstehenden Ansprüche, **dadurch gekennzeichnet, dass** als Haltemittel ein Anschlagelement an der Verriegelungswelle (4, 96) vorgesehenen ist, das mit einem Anschlagelement am zweiten Kupplungsteil zusammenwirkt, wobei vorzugsweise die Feder derart vorgespannt ist, dass die Verriegelungswelle (4, 96) von den Anschlagelementen entgegen der Federkraft in der verriegelnden Position gehalten werden.

5. Kupplung nach einem der vorstehenden Ansprüche, **dadurch gekennzeichnet, dass** die Verriegelungswelle (4, 96) mindestens ein Entriegelungssegment aufweist, das eine an der Außenseite der Verriegelungswelle vorgesehene Anschlagfläche (37, 38, 136) aufweist, die mit einem Auslöser zum Lösen der Verriegelungswelle (4, 96) aus der verriegelnden Position zusammenwirkt, wobei die Anschlagfläche (37, 38, 136) des Entriegelungssegments vorzugsweise in einer Ebene liegt, die die Rotationsachse der Verriegelungswelle (4, 96) schneidet.

6. Kupplung nach Anspruch 5, **dadurch gekennzeichnet, dass** das Entriegelungssegment in einem in Betätigungsrichtung des Auslösers vor der Anschlagfläche (37, 38, 136) liegenden Bereich eine Ausnehmung (35, 36) mit einer gegenüber dem Außenradius des Verriegelungsabschnitts (31, 131) geringeren radialen Ausdehnung aufweist.

7. Kupplung nach einem der vorstehenden Ansprüche, **dadurch gekennzeichnet, dass** als Mittel zum Lösen der Verriegelungswelle (4, 96) aus der verriegelnden Position ein manueller Betätiger, vorzugsweise ein insbesondere federnd gelagerter Druckknopf (11, 94, 151, 161, 171), vorgesehen ist.

8. Kupplung nach Anspruch 7, **dadurch gekennzeichnet, dass** das am zweiten Kupplungsteil ausgebildete Anschlagselement am manuellen Betätiger ausgebildet ist und in einer Ausgangsposition des manuellen Betätigers in einer den Verriegelungsabschnitt (31, 131) in einer verriegelnden Position haltenden Position ist, wobei die Verriegelungswelle (4, 96) durch Betätigen des manuellen Betätigers entgegen der Federkraft aus der verriegelnden Position lösbar ist.

9. Kupplung nach einem der vorstehenden Ansprüche, **gekennzeichnet durch** ein Schloss, das ausgebildet ist, ein unbefugtes Lösen des Verriegelungsabschnitts (31, 131) aus der verriegelnden Position behindern zu können.

10. Kupplung nach dem auf einen der Ansprüche 7 oder 8 rückbezogenen Anspruch 9, **dadurch gekennzeichnet, dass** das Schloss ausgebildet ist, um ein Betätigen des manuellen Betätigers blockieren zu können.

11. Kupplung nach einem der vorstehenden Ansprüche, **dadurch gekennzeichnet, dass** das Einsatzstück ein Kupplungsbolzen (1, 101) mit einer im Querschnitt im Wesentlichen kreisrunden Mantelfläche und mit mindestens einer zumindest teilweise umlaufenden Verriegelungsnut (22, 103) ist.

12. Kupplung nach einem der vorstehenden Ansprüche, **dadurch gekennzeichnet, dass** die Kupplung in Gestalt einer Anhängerkupplung für einen Fahrradanhänger ist, oder
dass das eine der beiden Kupplungsteile ein mit einer Buggyradaufnahme verbundener Kupplungsbolzen (101) und das andere Kupplungsteil eine mit einem vorderen Rahmenteil eines Fahrradanhängers (81) verbundene Hülse (98) ist, oder
dass das eine der beiden Kupplungsteile ein Deichselende und das andere Kupplungsteil eine an einem Fahrradanhänger ausgebildete Deichselaufnahme ist, wobei vorzugsweise das fahrradanhängerseitige Ende der Deichsel als erstes Kupplungselement mit einer Verriegelungsnut (22, 103) und die Deichselaufnahme als zweites Kupplungselement ausgebildet ist.

13. Kupplung nach Anspruch 7 oder einem der darauf rückbezogenen Ansprüche, **dadurch gekennzeichnet, dass** die Betätigungsrichtung des manuellen Betätigers in Richtung der Längsachse des Einsatzstücks verläuft, oder dass die Betätigungsrichtung des manuellen Betätigers quer zur Längsachse des Einsatzstücks verläuft.

14. Kupplung nach den Ansprüchen 7 und 9, **dadurch gekennzeichnet, dass** das Schloss einen Schließzylinder (8, 156, 172) aufweist, der parallel oder quer zur Betätigungsrichtung des Druckknopfs (11, 151, 171) angeordnet und/oder der im Druckknopf (161) gelagert ist.

## Claims

1. Coupling for connecting and/or holding together two parts, in particular for a bicycle trailer, having a first and a second coupling part which interact and can be released from one another, one of which is an insert piece (1) connected to one of the parts and the other of which is a sleeve (2) connected to the other of the parts, the sleeve (2) being suitable for at least partially engaging around the insert piece (1), and the first coupling part having at least one locking groove (22, 103), at least one locking shaft (4, 96) being mounted on or in the second coupling part, which locking shaft (4, 96) has at least one locking segment which, in the circumferential direction, has at least one locking section (31, 131) and one unlocking section (32, 132), the locking section (31, 131) having a greater radial extent than the unlocking section (32, 132), the locking shaft (4, 96) having a rotation axis which is arranged substantially transversely to a direction of insertion of the insert piece into the sleeve, preferably parallel to the locking groove (22, 103), and the locking shaft (4, 96) being arranged such that the locking section (31, 131) can engage in the locking groove (22, 103) when the insert piece (1) is inserted into the sleeve (2) and the unlocking section (32, 132) cannot engage in the locking groove (22, 103), wherein means are provided for rotating the locking section (31, 131) into the locking position, for holding the locking section (31, 131) in the locking position, and for releasing the locking section (31, 131) from the locking position, **characterized in that** a spring acting on the locking shaft (4, 96) is provided as means for rotating the locking shaft (4, 96) into the locking position, and the locking shaft is arranged such that the locking portion of the locking shaft is deflected by the insert piece (1) against a spring force of the spring when the insert piece (1) is inserted into the sleeve (2) and is then automatically rotated into the locking groove of the insert piece (1) by the tensioned spring as soon as the insert piece (1) is inserted far enough into the sleeve (2).

2. Coupling according claim 1, **characterized in that** the rotation axis passes through a portion of the locking groove, the unlocking portion having a negative radial extent with respect to the axis of rotation.

3. Coupling according to claim 1 or 2, **characterized in that** the spring acting on the locking shaft (4, 96) is a torsion spring (6, 97).

4. Coupling according to one of the preceding claims, **characterized in that** a stop element is provided on the locking shaft (4, 96) as holding means, the stop element cooperating with a stop element on the second coupling part, the spring preferably being preloaded in such a way that the locking shaft (4, 96) is held in the locking position by the stop elements against the spring force.

5. Coupling according to one of the preceding claims, **characterized in that** the locking shaft (4, 96) comprises at least one unlocking segment having a stop surface (37, 38, 136) provided on the outside of the locking shaft and cooperating with a release for releasing the locking shaft (4, 96) from the locking position, the stop surface (37, 38, 136) of the unlocking segment preferably lying in a plane intersecting the axis of rotation of the locking shaft (4, 96).

6. Coupling according to claim 5, **characterized in that** the unlocking segment has, in a region lying in front of the stop surface (37, 38, 136) in the actuating direction of the release, a recess (35, 36) having a smaller radial extent than the outer radius of the locking section (31, 131).

7. Coupling according to one of the preceding claims, **characterized in that** a manual actuator, preferably a push button (11, 94, 151, 161, 171), in particular a spring-mounted push button, is provided as means for releasing the locking shaft (4, 96) from the locking position.

8. Coupling according to claim 7, **characterized in that** the stop member formed on the second coupling part is formed on the manual actuator and is, in an initial position of the manual actuator, in a position holding the locking portion (31, 131) in a locking position, wherein the locking shaft (4, 96) is releasable from the locking position by actuating the manual actuator against the spring force.

9. Coupling according to one of the preceding claims, **characterized by** a lock adapted to be capable of impeding unauthorized release of the locking portion (31, 131) from the locking position.

10. Coupling according to claim 9 referred back to one of claims 7 or 8, **characterized in that** the lock is adapted to be able to block actuation of the manual actuator.

11. Coupling according to one of the preceding claims, **characterized in that** the insert piece is a coupling bolt (1, 101) with an in cross-section substantially circular lateral surface and with at least one at least partially circumferential locking groove (22, 103).

12. Coupling according to one of the preceding claims, **characterized in that** the coupling is in the form of a trailer hitch for a bicycle trailer, or that one of the two coupling parts is a coupling bolt (101) connected to a buggy wheel receptacle and the other coupling part is a sleeve (98) connected to a front frame part of a bicycle trailer (81), or **in that** one of the two coupling parts is a drawbar end and the other coupling part is a drawbar receptacle formed on a bicycle trailer, preferably the bicycle trailer-side end of the drawbar being formed as a first coupling element with a locking groove (22, 103) and the drawbar receptacle being formed as a second coupling element.

13. Coupling according to claim 7 or one of the claims referring back thereto, **characterized in that** the actuating direction of the manual actuator is in the direction of the longitudinal axis of the insert piece, or that the actuating direction of the manual actuator is transverse to the longitudinal axis of the insert piece.

14. Coupling according to claims 7 and 9, **characterized in that** the lock has a lock cylinder (8, 156, 172) which is arranged parallel or transversely to the actuating direction of the push button (11, 151, 171) and/or which is mounted in the pushbutton (161).

## Revendications

1. Couplage pour la liaison et/ou le maintien ensemble de deux parties, notamment pour une remorque pour bicyclette, muni d'une première et d'une deuxième partie de couplage, qui coopèrent et sont détachables l'une de l'autre, parmi lesquelles une est une pièce d'insertion (1) reliée avec une des parties et l'autre est une douille (2) reliée avec l'autre des parties, la douille (2) étant appropriée pour venir au moins partiellement en prise autour de la pièce d'insertion (1), et la première partie de couplage comprenant au moins une rainure de verrouillage (22, 103), au moins un arbre de verrouillage (4, 96) étant monté sur ou dans la deuxième partie de couplage, qui comprend au moins un segment de verrou, qui comprend dans la direction périphérique au moins une section de verrouillage (31, 131) et une section de déverrouillage (32, 132), la section de verrouillage (31, 131) présentant une étendue radiale plus grande que la section de déverrouillage (32, 132), l'arbre de verrouillage (4, 96) ayant un axe de rotation, qui est agencé essentiellement perpendiculairement à une direction d'enfilage de la pièce d'insertion dans la douille, de préférence parallèlement à la rainure de verrouillage (22, 103), et l'arbre de verrouillage (4, 96) étant agencé de telle sorte que la section de verrouillage (31, 131) puisse pénétrer dans la rainure de verrouillage (22, 103) lorsque la pièce d'insertion (1) est insérée dans la douille (29), et que la section de déverrouillage (32, 132) ne puisse pas pénétrer dans la rainure de verrouillage (22, 103), des moyens pour la rotation de la section de verrouillage (31, 131) dans la position verrouillante, pour le maintien de la section de verrouillage (31, 131) dans la position verrouillante et pour le détachement de la section de verrouillage (31, 131) de la position verrouillante étant prévus, **caractérisé en ce qu'**un ressort agissant sur l'arbre de verrouillage (4, 96) est prévu en tant que moyen pour la rotation de l'arbre de verrouillage (4, 96) dans la position verrouillante, et l'arbre de verrouillage est agencé de telle sorte que, lors de l'insertion de la pièce d'insertion (1) dans la douille (2), la section de verrouillage de l'arbre de verrouillage soit déviée par la pièce d'insertion (1) à l'encontre d'une force de ressort du ressort et ensuite vissée par le ressort tendu automatiquement dans la rainure de verrouillage de la pièce d'insertion (1) dès que la pièce d'insertion (1) est insérée suffisamment loin dans la douille (2).

2. Couplage selon la revendication 1, **caractérisé en ce que** l'axe de rotation passe par une section de la rainure de verrouillage, la section de déverrouillage ayant une étendue radiale négative par rapport à l'axe de rotation.

3. Couplage selon la revendication 1 ou 2, **caractérisé en ce que** le ressort agissant sur l'arbre de verrouillage (4, 96) est un ressort de torsion (6, 97) .

4. Couplage selon l'une quelconque des revendications précédentes, **caractérisé en ce qu'**un élément de butée est prévu en tant que moyen de maintien sur l'arbre de verrouillage (4, 96), qui coopère avec un élément de butée sur la deuxième partie de couplage, le ressort étant de préférence prétendu de telle sorte que l'arbre de verrouillage (4, 96) soit maintenu par les éléments de butée à l'encontre de la force de ressort dans la position verrouillante.

5. Couplage selon l'une quelconque des revendications précédentes, **caractérisé en ce que** l'arbre de verrouillage (4, 96) comprend au moins un segment de déverrouillage, qui comprend une surface de butée (37, 38, 136) prévue sur le côté extérieur de l'arbre de verrouillage, qui coopère avec un déclencheur pour le détachement de l'arbre de verrouillage (4, 96) de la position verrouillante, la surface de butée (37, 38, 136) du segment de déverrouillage se situant de préférence dans un plan, qui coupe l'axe de rotation de l'arbre de verrouillage (4, 96).

6. Couplage selon la revendication 5, **caractérisé en ce que** le segment de déverrouillage comprend, dans une zone située avant la surface de butée (37, 38, 136) dans la direction d'actionnement du déclencheur, un évidement (35, 36) ayant une étendue radiale plus faible par rapport au rayon extérieur de la section de verrouillage (31, 131).

7. Couplage selon l'une quelconque des revendications précédentes, **caractérisé en ce qu'**un actionneur manuel, de préférence un bouton-poussoir (11, 94, 151, 161, 171) notamment monté élastiquement, est prévu en tant que moyen pour le détachement de l'arbre de verrouillage (4, 96) de la position verrouillante.

8. Couplage selon la revendication 7, **caractérisé en ce que** l'élément de butée formé sur la deuxième partie de couplage est formé sur l'actionneur manuel et est, dans une position initiale de l'actionneur manuel, dans une position maintenant la section de verrouillage (31, 131) dans une position verrouillante, l'arbre de verrouillage (4, 96) étant détachable de la position verrouillante par actionnement de l'actionneur manuel à l'encontre de la force de ressort.

9. Couplage selon l'une quelconque des revendications précédentes, **caractérisé par** une serrure, qui est configurée pour pouvoir empêcher un détachement non autorisé de la section de verrouillage (31, 131) de la position verrouillante.

10. Couplage selon la revendication 9 renvoyant à l'une quelconque des revendications 7 ou 8, **caractérisé en ce que** la serrure est configurée pour pouvoir bloquer un actionnement de l'actionneur manuel.

11. Couplage selon l'une quelconque des revendications précédentes, **caractérisé en ce que** la pièce d'insertion est un boulon de couplage (1, 101) muni d'une surface d'enveloppe essentiellement circulaire dans la section transversale et muni d'au moins une rainure de verrouillage (22, 103) au moins partiellement circonférentielle.

12. Couplage selon l'une quelconque des revendications précédentes, **caractérisé en ce que** le couplage est sous la forme d'un couplage de remorque pour une remorque pour bicyclette, ou
**en ce qu'**une des deux parties de couplage est un boulon de couplage (101) relié à un réceptacle de roue de poussette et l'autre partie de couplage est une douille (98) reliée à une partie de cadre avant d'une remorque pour bicyclette (81), ou
**en ce qu'**une des deux parties de couplage est une extrémité de barre de traction et l'autre partie de couplage est un réceptacle de barre de traction formé sur une remorque pour bicyclette, l'extrémité côté remorque pour bicyclette de la barre de traction étant de préférence configurée en tant que premier élément de couplage muni d'une rainure de verrouillage (22, 103) et le réceptacle de barre de traction en tant que deuxième élément de couplage.

13. Couplage selon la revendication 7 ou l'une quelconque des revendications renvoyant à celle-ci, **caractérisé en ce que** la direction d'actionnement de l'actionneur manuel est dans la direction de l'axe longitudinal de la pièce d'insertion, ou **en ce que** la direction d'actionnement de l'actionneur manuel est perpendiculaire à l'axe longitudinal de la pièce d'insertion.

14. Couplage selon les revendications 7 et 9, **caractérisé en ce que** la serrure comprend un cylindre de serrure (8, 156, 172), qui est agencé parallèlement ou perpendiculairement à la direction d'actionnement du bouton-poussoir (11, 151, 171) et/ou qui est monté dans le bouton-poussoir (161).
